Europäisches Patentamt

(19) European Patent Office

Office européen des brevets

(11) Publication number: **0 057 917**
A1

## EUROPEAN PATENT APPLICATION

(21) Application number: **82100813.3**

(22) Date of filing: **04.02.82**

(51) Int. Cl.³: **B 60 C 7/10**

(30) Priority: **09.02.81 US 233012**

(43) Date of publication of application:
**18.08.82 Bulletin 82/33**

(84) Designated Contracting States:
**AT BE DE FR GB IT NL**

(71) Applicant: Bookstaver, Charles W.
22095 Forest Rim Circle
El Toro California 92630(US)

(71) Applicant: Panaroni, Vincent F.
24912 Timberwood Way
El Toro California 92630(US)

(72) Inventor: Bookstaver, Charles W.
22095 Forest Rim Circle
El Toro California 92630(US)

(72) Inventor: Panaroni, Vincent F.
24912 Timberwood Way
El Toro California 92630(US)

(74) Representative: PATENTANWÄLTE HENKEL - KERN -
FEILER - HÄNZEL
Möhlstrasse 37
D-8000 München 80(DE)

(54) Spoke locking non-pneumatic inner tube.

(57) A polyurethane non-pneumatic inner tube mounted on a conventional spoked bicycle tire rim having spokes projecting through the medial band thereof with spoke screw heads screwed onto the radial outer extremities of the spokes. The inner tube itself is preformed from an open cell polyurethane core (42) encased in a closed core skin (41) and is in the form of a donut shaped ring having an uncompressed cross section somewhat larger than the cross section of the interior cavity of the tire. Such inner tube also includes a continuous annular locking tongue (13) projecting radially inwardly from the ring for pressing engagement on its radially inner extremity with the screw heads of the spokes to thus frictionally hold such screw heads against unintentional rotation.

FIG.3

SPOKE LOCKING NON-PNEUMATIC INNER TUBE

BACKGROUND OF THE INVENTION

Field of the Invention:

The present invention related to non-pneumatic tubes and, more particularly, to preformed non-pneumatic inner tubes which may be mounted in a conventional pneumatic tire received on a conventional spoked rim.

Description of the Prior Art:

Numerous efforts have been made to provide a satisfactory non-pneumatic tire. Such efforts have led to foam filled tires wherein the cavity of the tire normally receiving a pneumatic inner tube is filled with a polyurethane foam after mounting of a tire on a rim. A tire of this type is shown in U.S. Patent No. Re 29,890 to Gomberg. These tires suffer the shortcoming that the rather elaborate and expensive equipment required for fitting thereof, is not normally available at typical bicycle shops and the like. Other efforts have led to proposing donut shaped fillers received within the tire but normally spaced radially outwardly from the medial portion of the rim, thus remaining clear of any screw elements on the ends of spokes projecting through such rim. Plastic tires have been proposed which incorporate annular strips received between the rim side flanges. One such tire is shown in U.S. Patent No. 4,033,395.

However, such tires suffer the shortcoming that they are constructed in strip form, thus requiring splicing together of the ends of the strips. More importantly, the annular strips therein incorporate annular, radially inwardly opening grooves designed specifically for clearing the screw heads on the ends of the wheel spokes.

Other efforts have led to the proposal of self-supporting thick walled cylindrical hoses which are inserted as replacements for pneumatic inner tubes. Such hose type tubes suffer the shortcoming that they frequently are ineffective to cooperate with the rim to hold the tire thereon and that they too, normally clear the spoke screw heads, thereby leaving such heads free to unscrew under vibration of typical use. Efforts to solve the problems attendant such tube have led to inserting multiple layers of rim strips to fill the cavity between the tube and rim, but such efforts have proven inconvenient and unsuccessful.

Polyurethane tires have been proposed with an integral exterior shim as disclosed in U.S. Patent No. 3,348,597 to Goldberg. However, such tires suffer the shortcoming that the exterior shims are not sufficiently wear resistant for normal road use and the tire itself must be formed directly on the axle so cannot be installed on a rim at a location remote from the site where the fitter apparatus is located.

Applicant is unaware of any polyurethane performed inner tube formed with an open cell core encased in a closed cell shim and having a radially inwardly locking tongue formed integrally therewith for projecting radially inwardly into the space formed between the rim flanges to frictionally engage screw elements on the ends of spokes projecting through the rim.

## SUMMARY OF THE INVENTION

The inner tube of the present invention is characterized by a compressible, semisolid donut shaped polyurethane ring for filling the tire cavity and an integral radially inwardly projecting annular tongue which cooperates with the ring to form a radial dimension which, in its compressed condition, is greater than the normal radial dimension formed by the distance across the tire cavity to the medial portion of the tire rim.

These and other features of the invention will become apparent, from a consideration of the following detailed description of the drawings.

## DESCRIPTION OF THE DRAWINGS

Fig. 1 is a perspective view of a tire encasing an inner tube incorporating the present invention;

Fig. 2 is a perspective view of the tire inner tube encased in the tire shown in Fig. 1;

Fig. 3 is a radial crosssectional view, in enlarged scale, taken along the line 3 - 3 of Fig. 2; and,

Fig. 4 is a radial cross sectional view, in enlarged scale, taken along the line 4 - 4 of Fig. 1.

## DESCRIPTION OF THE PREFERRED EMBODIMENT

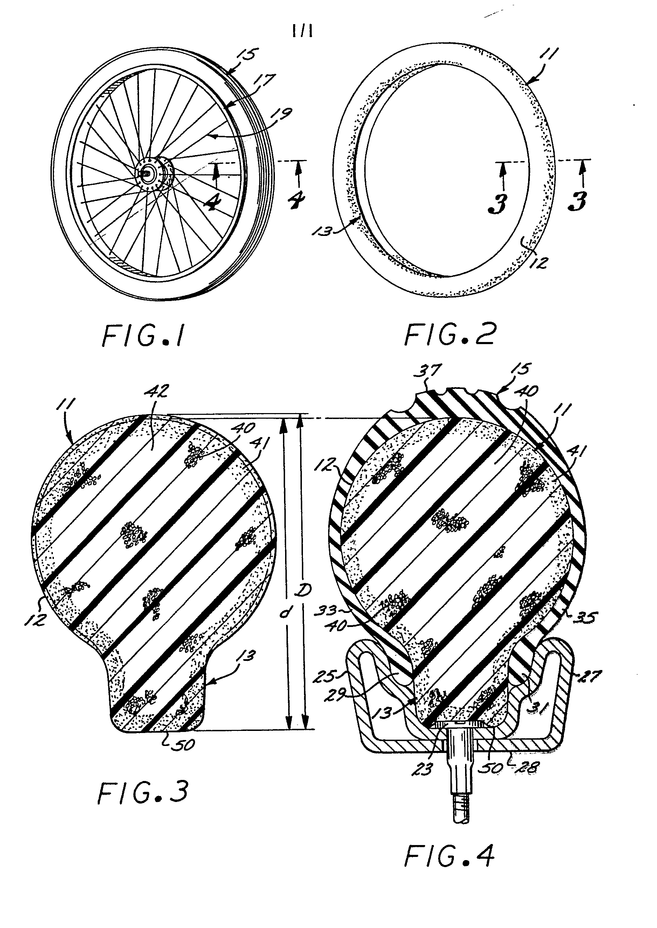

The inner tube of the present invention is formed of a semirigid, micro cellular polyurethane foam and defines, generally, a donut shaped cylindrical in cross section tire fill ring 12 formed integrally with a radially inwardly projecting locking tongue 13. The tube 11 is received in the cavity of a tire, generally designated 15, mounted on a rim 17 carried on an array of spokes, generally designated 19. The uncompressed radial crosssectional dimension D of the tube 11 is greater than the distance d between the interior surface of the tire tread wall and the radial outer surface of the medial rim band 21. Consequently, with the tube 11 mounted in position on the rim 17, the tire 15 will serve to urge the locking tongue 13 radially inwardly to maintain continuous frictional engagement with the screw heads formed by the spoke nipples 23 (Fig. 4), screwed onto the radially outer ends of the spokes 19 to thus prevent accidental unscrewing thereof.

Referring to Fig. 4 in detail, the rim 17 in the preferred embodiment is of conventional bicycle style construction for use with a pneumatic tire and has a pair of oppositely disposed side flanges 25 and 27 radiating outwardly from a radially recessed annular medial band 28. Such side flanges receive therebetween the beads 29 and 31 of the sidewalls 33 and 35 of the tire 15. The tire 15 is also of conventional construction and is formed with a radially outer tread wall 37.

Referring to Fig. 3, the ring 12 of the tube 11 has an overall exterior diameter slightly greater than that of the cavity of the tire 15 and, in its uncompressed condition, is approximately 10% larger in cross section than the corresponding cross section of the tube cavity formed in the tire 15. The tongue 13 is formed integral with the ring 12 and projects radially inwardly therefrom to cooperate therewith in forming a general key lock shape. In the preferred embodiment, the tube 11 is constructed of self skinning polyurethane and may take numerous different forms, it only being important that it be of a micro cellular foam having about 95% open cells 40 in the core 42 thereof. Traditional polyurethane foam is employed with diisocyanate added, blown with Freon with naturally evolved $CO_2$ to form such open cell core.

The tube 11 is formed in a mold (not shown), in such a manner as to form a closed cell skin 41 about the periphery thereof wich is tougher than the interior core 42 to act as a water barrier and encapsulate such interior open cell core to protect same against scuffing, chaffing and tearing during handling and mounting thereof on the rim 17.

Referring to Fig. 4, the axial dimension of the tongue 13 disposed between the mounting flanges 25 and 27 of the rim 17 is approximately 10% less than the axial dimension between such mounting flanges to thus provide sufficient room to accommodate such tongue during mounting of the tube and tire on the rim 17.

In operation, the tube 11 of the present invention may be installed in a conventional pneumatic bicycle or wheelchair tire 15 mounted on a conventional rim 17. It will be appre-ciated that the pneumatic tube will be discarded and, if desirable, the tube strip or liner typically in the form of an annular belt covering the screw heads 23 may be removed.

One bead of the tire 15 may then be mounted in the rim 17 in a conventional manner and the tube 15 will then be stuffed into position within the cavity of the tire to thus be urged radially inwardly by such tire. The second tire bead may then be threaded onto the rim 17 to be retained within the rim flange 27 and to thus draw the tube radially inwardly toward the medial band 28 of the rim 17 to thus urge the radially inner surface 50 against the screw heads or nipples. As will be apparent to those skilled in the art, such mounting of the tire 15 and tube 11 will frequently result in considerable abuse to the tube itself. However, the closed cell skin withstands such abuse, while the open cell core 42 provides the necessary compressability to facilitate mounting of the tube within the tires and to exhibit pneumatic tire like side characteristics.

It will be appreciated that with the tube 11 so mounted on the rim 17 and retained by the tire 15, the tire will present every riding characteristic normally associated with pneumatic tires except for undesirable puncture and/or deflation so frequently experienced just at the time the bicycle is to be ridden. That is, during riding thereof, the force applied downwardly on the rim 17 as the wheel advances over an underlying support surface will be resisted by the tendency of the tube 11 to collapse radially and enlarge axially. The open cell polyurethane core 42 described hereinabove, when acting in the configuration shown, results in the ring 12 and locking tongue 13 supporting the weight directly from the intermediate rim flange 21 as dictated by the compressibility characteristics of the ring and tongue. The closed cell skin 41, in addition to protecting the open cell core 42 from puncture and tear also serves as a water barrier to protect the open cells 40 of such core from filling with water during operation under wet conditions.

Moreover, the performance of the tire 15 in maintaining the ring 12 and tongue 13 compressed radially inwardly, particularly in the loaded condition, serves to frictionally retain the screw heads 23 against unscrewing thereof during vibration forces applied thereto during operation of the bicycle rim. Such annular tongue also cooperates with the ring 12 to resist the tendency of the tire 15 to roll off the rim 17, particularly during cornering at high speeds.

Consequently, the inner tube of the present invention not only exhibits all characteristics of conventional riding on a pneumatic inner tube, but overcomes the problems attendant non-pneumatic problems that are normally associated with non-pneumatic inner tubes heretofore used in the art. All this while avoiding the inconvenience and expense typically attendant . tires which are to be filled, after mounting on a rim, with self-setting liquid fill.

WHAT IS CLAIMED IS:

1. A spoke locking tire inner tube for receipt on a rim having spoke screw heads projecting through the medial band thereof and side flanges projecting radially outwardly from said medial band and spaced apart a predetermined axial distance, said rim adopted for mounting a hollow, flexible elastic tire having side walls terminating on their radially inner edges in annular beads for directly engaging the axially inner sides of said flanges, said tire cooperating with said rim to define a generally keyway shaped cross sectional cavity defining a predetermined cross sectional radial dimension, said tube comprising:

a resilient and continuous compressible preformed cellular donut shaped ring for receipt in said cavity; and

flexible locking tongue means formed integral with said ring and projecting radially inwardly to abuttingly engage said spoke screw heads, said tongue having a sufficiently narrow axial dimension to be received between said beads when engaged with said respective flangs, said ring and locking tongue, further, in the uncompressed condition of said tube, cooperating to define a radial dimension greater than said predetermined radial dimension, said ring and tongue being even further compressible and configured to be manually compressed and receive in said cavity as said tire is being mounted on said rim to cooperate together and press said locking tongue radially inwardly to frictionally engage said spoke heads to restrict rotation thereof; and,

- 2 -

a skin encompassing said tire fill ring and locking tongue means whereby one wall of said hollow tire may be mounted on said rim and a workman may progressivly mount said tube on said rim by inserting said tongue in the space between said flanges and progressively, manually compress said tube in the radial direction to insert it in said cavity and the opposite said wall of said tire may be fitted on said rim to hold said tube compressed in the radial direction for carring a load applied to said rim.

2.  A tube as set forth in Claim 1 wherein:
said ring and locking tongue cooperate in cross section to form a key hole shape.

3.  A tube as set forth in Claims 1 wherein:
said tube is constucted of polyurethane and is formed with an open cell core encased in a closed cell skin.

4.  A tube as set forth in Claim 1 wherein:
said skin is fluid resistant.

5.  A tube set forth in Claim 1 wherein:
said core is formed of a micro cellular foam having about 95% open cells and said closed cell skin is fluid resistant.

0057917

1/1

1/1

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 047 637 (MACPHERSON) *Page 1, line 64 - page 2, line 24* | 1,2 | B 60 C 7/10 |
| Y | US-A-2 237 182 (A.IKNAYAN) *Page 1, left-hand column, line 1 - page 2, right-hand column, line 10* | 1 | |
| A | FR-A-1 303 101 (S.A.CEM) | | |
| A | GB-A-1 178 189 (MOTOBECANE) | | |
| A | US-A-1 470 048 (T.BARKER) | | |
| A | FR-A-2 310 230 (GOODYEAR) & GBA 1524472 | | **TECHNICAL FIELDS SEARCHED (Int. Cl. ³)** B 60 C 7/00 |
| A,D | US-A-4 033 395 (W.BERG) | | |

-----

The present search report has been drawn up for all claims

| Place of search | Date of completion of the search | Examiner |
|---|---|---|
| THE HAGUE | 11-05-1982 | SCHMITT L.P. |